(19) Europäisches Patentamt
European Patent Office
Office européen des brevets

(11) EP 1 829 081 B1

## (12) EUROPEAN PATENT SPECIFICATION

(45) Date of publication and mention
of the grant of the patent:
**05.12.2018 Bulletin 2018/49**

(21) Application number: **05821683.9**

(22) Date of filing: **23.12.2005**

(51) Int Cl.:
**H01J 49/16** *(2006.01)*    **G02B 27/09** *(2006.01)*
**H01J 49/00** *(2006.01)*

(86) International application number:
**PCT/GB2005/005054**

(87) International publication number:
**WO 2006/067495 (29.06.2006 Gazette 2006/26)**

(54) **MASS SPECTROMETER**

MASSENSPEKTROMETER

SPECTROMÈTRE DE MASSE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **23.12.2004 GB 0428185**
**07.01.2005 US 641959 P**

(43) Date of publication of application:
**05.09.2007 Bulletin 2007/36**

(73) Proprietor: **Micromass UK Limited
Wilmslow SK9 4AX (GB)**

(72) Inventors:
• **BROWN, Jeffery Mark
Hyde,
Cheshire SK14 6LT (GB)**
• **KENNY, Daniel James
Northwich,
Cheshire CW9 8JF (GB)**

(74) Representative: **Dehns
St. Brides House
10 Salisbury Square
London EC4Y 8JD (GB)**

(56) References cited:
**EP-A2- 1 150 156         WO-A1-00/70647
WO-A2-2005/079360    JP-A- H10 258 383
US-A- 3 347 129          US-A1- 2002 049 511
US-A1- 2004 084 426    US-B1- 6 762 405**

• **"Manual Beam Expander" [Online] June 2001
(2001-06), CASCADE LASER CORP , NEWBERG,
OR, USA , XP002424442 Retrieved from the
Internet:
URL:HTTP://WWW.CASCADELASER.COM/PDF
%20FILE S/MANUAL_BEAM_EXPANDER.PDF>
page 2, column 1, line 3 - line 7 page 3, column 1,
line 1 - line 14 figures 1,2**
• **BOYD J G IV ET AL: "Fast-response Variable
Focusing Micromirror Array Lens"
PROCEEDINGS OF THE SPIE, SPIE,
BELLINGHAM, VA, US, vol. 5055, 2003, pages
278-286, XP002990703 ISSN: 0277-786X**
• **SIDNEY F. RAY: "Applied Photographic Optics,
Imaging System for Photography Film and Video"
1988, FOCAL PRESS , GREAT BRITAIN ,
XP002424165 page 173 - page 177**
• **ADISORN TUANTRANONT ET AL: "Segmented
Silicon-Micromachined Microelectromechanical
Deformable Mirrors for Adaptive Optics" IEEE
JOURNAL OF SELECTED TOPICS IN QUANTUM
ELECTRONICS, IEEE SERVICE CENTER,
PISCATAWAY, NJ, US, vol. 8, no. 1, January 2002
(2002-01), XP011062035 ISSN: 1077-260X**

**Description**

The present invention relates to apparatus for controlling the size of a laser beam which is targeted, in use, onto a target region of an ion source and a method of controlling the size of a laser beam which is targeted onto a target region of an ion source. The preferred embodiment relates to an imaging device for an ion source and a method of generating ions. The preferred embodiment further relates to an imaging device for controlling the spot size of a laser beam which is targeted onto a target region of a MALDI ion source .

Matrix Assisted Laser Desorption Ionisation ("MALDI") ion imaging mass spectrometry is a technology that generates molecular profiles and two-dimensional ion density maps from mass spectra acquired by mass analysing a sample at different points along or across the sample surface. For biological samples, peptide and protein signals can be taken directly from the surface of thin tissue sections which allows specific information to be obtained such as the relative abundance and spatial distribution of biological analytes . An important aspect of this approach is that a correlation can be maintained between the specific ion images and histological features observed by optical microscopy or other imaging techniques. With this method very different sample targets such as thin tissue slices, single cells, bioactive surfaces containing immobilized proteins, micro-deposited HPLC fractions or other MALDI sample preparations, for example, may be investigated. The spatial resolution of the known ion imaging approach is limited by the diameter of the laser beam which impinges upon the target plate or sample surface.

US 6,762,405 discloses a conventional MALDI mass spectrometry system which utilises an arrangement of lenses in its operation. WO 2005/079360 also discloses a MALDI mass spectrometry system, instead involving a digital micro-mirror array in its operation.

Conventional mass spectrometers comprising a MALDI ion source and a Time of Flight mass analyser are not suitable for ion imaging applications since the laser beam typically has a spot size which is 100-300 $\mu$m in diameter. Such a relatively large diameter beam is incompatible with high resolution ion imaging applications.

A known method of generating ion images from samples using MALDI is an ion microprobe as disclosed in Spengler, J. Am. Soc. Mass Spectrom. 2002, 13, 735-748. An ion microprobe has a laser spot which is focused to a spot diameter which is compatible with the required lateral resolution. The sample target is then moved beneath the laser spot in a known raster pattern. The ions desorbed are then analysed by a mass spectrometer and for each raster point (or pixel) a mass spectrum is generated and stored together with the spatial coordinates. This allows a 2D ion image for any mass to charge ratio to be created.

The ion microprobe may use a 0.5 $\mu$m laser spot by using a compound objective lens having a high numerical aperture. Visible light from the sample can also be imaged using an integrated confocal microscope using the same objective lens. The ion microprobe enables an optical image to be compared directly with an ion image obtained from the sample.

Another known instrument comprises a mass microscope as disclosed by Heeren et. al, Anal. Chem. 2004, 76, 5339-5344. A mass microscope differs from an ion microprobe in that the laser spot may be significantly larger as it does not limit the optical resolution. In a mass microscope the sample target acts as an ion optical object that is focused onto an ion optical image plane where ions are detected by an array ion detector. The spatial resolution for the mass microscope is reported to be about 4 $\mu$m.

A mass microscope requires a timed ion gate in order to allow only ions having mass to charge ratios within a very small range to reach the ion detector. The array ion detectors used are limited in data throughput and are incapable of recording full mass spectra. This is a significant problem and generally the preferred method of ion imaging is to use an ion microprobe rather than a mass microscope.

The mean laser fluence for a laser spot defined as the total energy incident per unit area per laser pulse is an important experimental parameter in MALDI applications. For any particular class of analyte and matrix, the laser fluence values providing optimised ion generation typically only span about a factor two beyond that of the threshold fluence which is defined as the onset of ion generation. If the laser fluence is too high then the analyte ions will simply fragment and the sensitivity will be correspondingly reduced.

Experimental results presented by Hillenkamp and Dreisewerd show that the laser fluence threshold needs to be increased if a smaller laser spot is used and this reduces sensitivity.

The homogeneity of laser fluence within the laser spot is another important experimental parameter in obtaining high quality MALDI data. Ideally, the laser fluence across a spot should be as uniform as possible i.e. the laser fluence should ideally have a flat-topped profile. Local variations in fluence within the spot can result in lower ionisation efficiency and increase the occurrence of fragmentation.

Inhomogeneous laser fluence within the spot is therefore undesirable.

EP 1,150,156 and JP H10258383 each disclose optical systems designed to homogenise light beams through the use of an arrangement of lenses.

An ion microprobe includes complex laser optics which are specifically optimised for ion imaging at high lateral resolution (small spot sizes). If the image were defocused then the spot size would increase but this would be highly undesirable since the fluence of the laser spot would become substantially less homogeneous.

It is therefore desired to provide an improved imaging device for an ion source.

According to an aspect of the present invention there is provided a mass spectrometer as claimed in claim 1.

The one or more zoom lenses comprises a first lens and means arranged and adapted to alter or vary the axial position of the first lens. The one or more zoom lenses preferably further comprises a second lens and means arranged and adapted to alter or vary the axial position of the second lens. The one or more zoom lenses preferably comprises a third lens and means arranged and adapted to alter or vary the axial position of the third lens.

The one or more zoom lenses are preferably arranged to expand and/or contract a laser beam. The one or more zoom lenses are preferably arranged to increase and/or decrease the beam divergence of a laser beam. The one or more zoom lenses preferably comprise a variable magnification zoom lens or beam expander.

The image position of a laser spot preferably remains substantially invariant as the magnification is altered or changed.

According to another aspect of the present invention there is provided a mass spectrometer as claimed in claim 9.

The first laser beam and/or the second laser beam preferably have a substantially constant, uniform or homogeneous fluence or irradiance profile.

The overlap means preferably comprises one or more mirrors.

The apparatus preferably further comprises means arranged and adapted to vary the degree of overlap or recombination of the first and second beams. The means arranged and adapted to vary the degree of overlap or recombination preferably comprises one or more mirrors which are arranged to be translated or moved.

The image position of a laser spot preferably remains substantially invariant as the degree of overlap or recombination is altered or changed.

According to another aspect of the present invention there is provided a mass spectrometer as claimed in claim 15.

The image position of a laser spot preferably remains substantially invariant as the programmable mirror array or digital micro-mirror array is altered or changed.

The diameter or size of the laser beam which impinges, in use, upon the target region, sample surface or target plate is preferably selected from the group consisting of: (i) < 1 $\mu$m; (ii) 1-5 $\mu$m; (iii) 5-10 $\mu$m; (iv) 10-15 $\mu$m; (v) 15-20 $\mu$m; (vi) 20-25 $\mu$m; (vii) 25-30 $\mu$m; (viii) 30-35 $\mu$m;

(ix) 35-40 $\mu$m; (x) 40-45 $\mu$m; (xi) 45-50 $\mu$m; (xii) 50-55 $\mu$m; (xiii) 55-60 $\mu$m; (xiv) 60-65 $\mu$m; (xv) 65-70 $\mu$m; (xvi) 70-75 $\mu$m; (xvii) 75-80 $\mu$m; (xviii) 80-85 $\mu$m; (xix) 85-90 $\mu$m; (xx) 90-95 $\mu$m; (xxi) 95-100 $\mu$m; (xxii) 100-120 $\mu$m; (xxiii) 120-140 $\mu$m; (xxiv) 140-160 $\mu$m; (xxv) 160-180 $\mu$m; (xxvi) 180-200 $\mu$m; (xxvii) 200-250 $\mu$m; (xxviii) 250-300 $\mu$m; (xxix) 300-350 $\mu$m; (XXX) 350-400 $\mu$m; (xxxi) 400-450 $\mu$m; (xxxii) 450-500 $\mu$m;

(xxxiii) 500-600 $\mu$m; (xxxiv) 600-700 $\mu$m; (xxxv) 700-800 $\mu$m; (xxxvi) 800-900 $\mu$m; (xxxvii) 900-1000 $\mu$m; and (xxxviii) > 1000 $\mu$m.

The diameter or size of the laser beam is preferably continuously variable.

The laser beam which impinges, in use, upon the target region, sample surface or target plate preferably has a laser fluence or homogeneity which varies by 5%, $\leq$ 10%, $\leq$ 15%, $\leq$ 20%, $\leq$ 25%, $\leq$ 30%, $\leq$ 35%, $\leq$ 40%, $\leq$ 45%, $\leq$ 50%, $\leq$ 55%, $\leq$ 60%, $\leq$ 65%, $\leq$ 70%, $\leq$ 75%, $\leq$ 80%, $\leq$ 85%, $\leq$ 90%, $\leq$ 95% or $\leq$ 100% across at least 5%, 10%, 15%, 20%, 25%, 30%, 35%, 40%, 45%, 50%, 55%, 60%, 65%, 70%, 75%, 80%, 85%, 90%, 95% or 100% of the diameter, size or width of the laser beam.

The apparatus preferably further comprises one or more lasers. The one or more lasers preferably comprise a pulsed laser. The one or more lasers are preferably arranged to have a pulse width selected from the group consisting of: (i) < 1 ns; (ii) 1-2 ns; (iii) 2-3 ns; (iv) 3-4 ns; (v) 4-5 ns; (vi) 5-6 ns; (vii) 6-7 ns; (viii) 7-8 ns; (ix) 8-9 ns; (x) 9-10 ns; (xi) 10-20 ns; (xii) 20-30 ns; (xiii) 30-40 ns; (xiv) 40-50 ns; (xv) 50-60 ns; (xvi) 60-70 ns; (xvii) 70-80 ns; (xviii) 80-90 ns; (xix) 90-100 ns; (xx) 100-200 ns; (xxi) 200-300 ns; (xxii) 300-400 ns; (xxiii) 400-500 ns; (xxiv) 500-1000 ns; and (xxv) > 1 $\mu$s.

The one or more lasers preferably have a laser repetition rate selected from the group consisting of: (i) < 1 Hz; (ii) 1-5 Hz; (iii) 5-10 Hz; (iv) 10-15 Hz; (v) 15-20 Hz; (vi) 20-25 Hz; (vii) 25-30 Hz; (viii) 30-35 Hz; (ix) 35-40 Hz; (x) 40-45 Hz; (xi) 45-50 Hz; (xii) 50-100 Hz; (xiii) 100-200 Hz; (xiv) 200-300 Hz; (xv) 300-400 Hz; (xvi) 400-500 Hz; (xvii) 500-1000 Hz; (xviii) 1-2 kHz; (xix) 2-3 kHz; (xx) 3-4 kHz; (xxi) 4-5 kHz; (xxii) 5-10 kHz; (xxiii) 10-15 kHz; (xxiv) 15-20 kHz; (xxv) 20-25 kHz; (xxvi) 25-30 kHz; (xxvii) 30-35 kHz; (xxviii) 35-40 kHz; (xxix) 40-45 kHz; (xxx) 45-50 kHz; and (xxxi) > 50 kHz.

According to a less preferred embodiment the one or more lasers comprises a continuous laser.

The one or more lasers may comprise a gas laser, for example, a laser selected from the group consisting of: (i) a nitrogen laser which is arranged to emit laser radiation having a wavelength of 337 nm; and (ii) a $CO_2$ laser which is arranged to emit laser radiation having a wavelength of 10.6 $\mu$m.

The one or more lasers may comprise an Excimer laser, for example, a laser selected from the group consisting of: (i) an XeCl laser which is arranged to emit laser radiation having a wavelength of 308 nm; (ii) a KrF laser which is arranged to emit laser radiation having a wavelength of 248 nm; (iii) an ArF laser which is arranged to emit laser radiation having a wavelength of 193 nm;

The one or more lasers may comprise a solid state laser, for example, a laser selected from the group consisting of: (i) a Nd:YAG laser; (ii) a frequency tripled Nd:YAG laser arranged to emit laser radiation having a wavelength of 355 nm; (iii) a frequency quadrupled Nd:YAG laser arranged to emit laser radiation having a wavelength of 266 nm; and (iv) an Er:YAG laser arranged to emit laser radiation having a wavelength of 2.94 $\mu$m.

The one or more lasers may comprise a semiconductor laser, for example, a laser selected from the group consisting of: (i) GaN; (ii) AlN; (iii) InN; (iv) ZnSe; (v) GaAs; (vi) GaP; (vii) Si; (viii) AlGaN; (ix) InGaN; (x) AlGaInN; (xi) GaAlN; (xii) AlInGaN; (xiii) AlGaAs; (xiv) InGaAsP; (xv) GaAsP; (xvi) GaAlAs; (xvii) ZnCdSe; (xviii) SiC; and (xix) InGaAs.

According to less preferred embodiments the one or more lasers may comprise a liquid or dye laser, for example an organic dye laser.

The one or more lasers are preferably arranged to emit laser radiation having a wavelength selected from the group consisting of: (i) < 100 nm; (ii) 100-120 nm; (iii) 120-140 nm; (iv) 140-160 nm; (v) 160-180 nm; (vi) 180-200 nm; (vii) 200-220 nm; (viii) 220-240 nm; (ix) 240-260 nm; (x) 260-280 nm; (xi) 280-300 nm; (xii) 300-320 nm; (xiii) 320-340 nm; (xiv) 340-360 nm; (xv) 360-380 nm; (xvi) 380-400 nm; (xvii) 400-500 nm; (xviii) 500-600 nm; (xix) 600-700 nm; (xx) 700-800 nm; (xxi) 800-900 nm; (xxii) 900-1000 nm; (xxiii) 1000-1100 nm; (xxiv) 1100-1200 nm; (xxv) 1200-1300 nm; (xxvi) 1300-1400 nm; and (xxvii) 1400-1500 nm.

The one or more lasers may be arranged to emit laser radiation having a wavelength selected from the group consisting of: (i) 1.5-2.0 $\mu$m; (ii) 2.0-2.5 $\mu$m; (iii) 2.5-3.0 $\mu$m; (iv) 3.0-3.5 $\mu$m; (v) 3.5-4.0 $\mu$m; (vi) 4.0-4.5 $\mu$m; (vii) 4.5-5.0 $\mu$m; (viii) 5.0-5.5 $\mu$m; (ix) 5.5-6.0 $\mu$m; (x) 6.0-6.5 $\mu$m; (xi) 6.5-7.0 $\mu$m; (xii) 7.0-7.5 $\mu$m; (xiii) 7.5-8.0 $\mu$m; (ix) 8.0-8.5 $\mu$m; (x) 8.5-9.0 $\mu$m; (xi) 9.0-9.5 $\mu$m; (xii) 9.5-10.0 $\mu$m; (xiii) 10.0-10.5 $\mu$m; (xiv) 10.5-11.0 $\mu$m; and (xv) > 11.0 $\mu$m.

According to an embodiment the one or more lasers may be arranged to emit laser radiation having a photon energy selected from the group consisting of: (i) < 0.1 eV; (ii) 0.1-0.5 eV; (iii) 0.5-1.0 eV; (iv) 1.0-1.5 eV; (v) 1.5-2.0 eV; (vi) 2.0-2.5 eV; (vii) 2.5-3.0 eV; (viii) 3.0-3.5 eV; (ix) 3.5-4.0 eV; (x) 4.0-4.5 eV; (xi) 4.5-5.0 eV; (xii) 5.0-5.5 eV; (xiii) 5.5-6.0 eV; (xiv) 6.0-6.5 eV; (xv) 6.5-7.0 eV; (xvi) 7.0-7.5 eV; (xvii) 7.5-8.0 eV; (xviii) 8.0-8.5 eV; (xix) 8.5-9.0 eV; (xx) 9.0-9.5 eV; (xxi) 9.5-10.0 eV; (xxii) 10.0-10.5 eV; (xxiii) 10.5-11.0 eV; (xxiv) 11.0-11.5 eV; (xxv) 11.5-12.0 eV; (xxvi) 12.0-12.5 eV; (xxvii) 12.5-13.0 eV; (xxviii) 13.0-13.5 eV; (xxix) 13.5-14.0 eV; (xxx) 14.0-14.5 eV; (xxxi) 14.5-15.0 eV; (xxxii) 15.0-15.5 eV; (xxxiii) 15.5-16.0 eV; (xxxiv) 16.0-16.5 eV; (xxxv) 16.5-17.0 eV; (xxxvi) 17.0-17.5 eV; (xxxvii) 17.5-18.0 eV; (xxxviii) 18.0-18.5 eV; (xxxix) 18.5-19.0 eV; (xl) 19.0-19.5 eV; (xli) 19.5-20.0 eV; and (xlii) > 20.0 eV.

The apparatus preferably further comprises an attenuator for adjusting or reducing the intensity of a laser beam.

The apparatus preferably further comprises a vacuum chamber and wherein the target region, sample surface or target plate is located within the vacuum chamber. The vacuum chamber preferably comprises a window through which a laser beam is transmitted in use.

The apparatus preferably further comprises one or more mirrors for directing a laser beam onto the target region, sample surface or target plate. The apparatus preferably further comprises a focusing lens for focusing a laser beam onto the target region, sample surface or target plate. The focusing lens preferably has a focal length selected from the group consisting of: (i) < 5 mm; (ii) 5-10 mm; (iii) 10-15 mm; (iv) 15-20 mm; (v) 20-25 mm; (vi) 25-30 mm; (vii) 30-35 mm; (viii) 35-40 mm; (ix) 40-45 mm; (x) 45-50 mm; and (xi) > 50 mm. The focusing lens preferably comprises an achromatic doublet or aspheric lens.

The target region, sample surface or target plate is preferably selected from the group consisting of: (i) a thin tissue slice; (ii) a single cell; (iii) a bioactive surface containing immobilized proteins; (iv) micro-deposited HPLC fractions; (v) a portion of an intact biological cell or a biological sample; (vi) an affinity capture substrate; (vii) an antibody capture substrate; (viii) one or more lysated cells or biological samples; (ix) a blood plasma deposit; and (x) a serum deposit. The thin tissue slice may have a thickness < 100 $\mu$m, preferably < 50 $\mu$m, further preferably 10-25 $\mu$m.

The target region, sample surface or target plate may comprise a 2D-gel or an electro-blot of a 2D-gel.

The target region, sample surface or target plate may comprise one or more solid matrix-analyte deposits. The one or more solid matrix-analyte deposits may be formed by a sample preparation method selected from the group consisting of: (i) dried-droplet; (ii) vacuum-drying; (iii) crushed-crystal; (iv) fast-evaporation; (v) overlaying; (vi) sandwiching; (vii) spin-coating; (viii) slow-crystallization; (ix) Electrospray; and (x) depositing sample upon a precoated target spot.

According to less preferred embodiments the target region, sample surface or target plate may comprise a liquid matrix or an insoluble sample.

According to an embodiment the target region, sample surface or target plate may comprise a solid support. The solid support may comprise porous silicon.

The apparatus preferably further comprises an extraction lens or ion-optical arrangement arranged downstream of the target region, sample surface or target plate, the extraction lens or ion-optical arrangement being arranged to accelerate, attract or extract ions away from the target region, sample surface or target plate.

According to the preferred embodiment the ion source comprises a Matrix Assisted Laser Desorption Ionisation ("MALDI") ion source.

According to another embodiment the ion source comprises a Laser Desorption Ionisation ("LDI") ion source or a Desorption Ionisation on Silicon ("DIOS") ion source.

The target region, sample surface or target plate is preferably maintained at a pressure selected from the group consisting of: i) > 10"7 mbar; (ii) > 10"6 mbar; (iii) > 10"5 mbar; (iv) > 10"4 mbar; (v) > 10"3 mbar; (vi) > 10"2 mbar; (vii) > 0.1 mbar; (viii) > 1 mbar; (ix) > 10 mbar; (x) > 100 mbar; and (xi) > 1000 mbar.

The target region, sample surface or target plate is preferably maintained at a pressure selected from the group consisting of: (i) < 10"7 mbar; (ii) < 10'6 mbar; (iii) < 10"5 mbar; (iv) < 10"4 mbar; (v) < 10"3 mbar; (vi) < 0.01 mbar; (vii) < 0.1 mbar; (viii) < 1 mbar; (ix) < 10 mbar; (x) < 100 mbar; and (xi) < 1000 mbar.

The target region, sample surface or target plate is preferably maintained at a pressure selected from the group consisting of: (i) 10"7-10"6 mbar; (ii) 10~6-10"5 mbar; (iii) 10"5-10"4 mbar; (iv) 10"4-10"3 mbar; (v) 10"3-10-2 mbar; (vi) 10" ^lO"1 mbar; (vii) 0.1-1 mbar; (viii) 1-10 mbar; (ix) 10-100 mbar; and (x) 100-1000 mbar.

In a mode of operation the apparatus is preferably arranged to target a laser beam onto a target region, sample surface or target plate of an ion source.

In a mode of operation the apparatus is preferably arranged to target a laser beam onto a target region, sample surface or target plate of an ion imaging device.

The mass spectrometer preferably comprises a first electric field region and a first field free region arranged downstream of the first electric field region.

The mass spectrometer preferably further comprises a second electric field region and a second field free region arranged downstream of the second electric field region.

The mass spectrometer preferably further comprises a collision, fragmentation or reaction device. The collision, fragmentation or reaction device is preferably arranged to fragment ions by Collisional Induced Dissociation ("CID").

According to a less preferred embodiment the collision, fragmentation or reaction device is selected from the group consisting of: (i) a Surface Induced Dissociation ("SID") fragmentation device; (ii) an Electron Transfer Dissociation fragmentation device; (iii) an Electron Capture Dissociation fragmentation device; (iv) an Electron Collision or Impact Dissociation fragmentation device; (v) a Photo Induced Dissociation ("PID") fragmentation device; (vi) a Laser Induced Dissociation fragmentation device; (vii) an infrared radiation induced dissociation device; (viii) an ultraviolet radiation induced dissociation device; (ix) a nozzle-skimmer interface fragmentation device; (x) an in-source fragmentation device; (xi) an ion-source Collision Induced Dissociation fragmentation device; (xii) a thermal or temperature source fragmentation device; (xiii) an electric field induced fragmentation device; (xiv) a magnetic field induced fragmentation device; (xv) an enzyme digestion or enzyme degradation fragmentation device; (xvi) an ion-ion reaction fragmentation device; (xvii) an ion-molecule reaction fragmentation device; (xviii) an ion-atom reaction fragmentation device; (xix) an ion-metastable ion reaction fragmentation device; (xx) an ion-metastable molecule reaction fragmentation device; (xxi) an ion-metastable atom reaction fragmentation device; (xxii) an ion-ion reaction device for reacting ions to form adduct or product ions; (xxiii) an ion-molecule reaction device for reacting ions to form adduct or product ions; (xxiv) an ion-atom reaction device for reacting ions to form adduct or product ions; (xxv) an ion-metastable ion reaction device for reacting ions to form adduct or product ions; (xxvi) an ion-metastable molecule reaction device for reacting ions to form adduct or product ions; and (xxvii) an ion-metastable atom reaction device for reacting ions to form adduct or product ions.

A reaction device should be understood as comprising a device wherein ions, atoms or molecules are rearranged or reacted so as to form a new species of ion, atom or molecule. An X-Y reaction fragmentation device should be understood as meaning a device wherein X and Y combine to form a product which then fragments. This is different to a fragmentation device per se wherein ions may be caused to fragment without first forming a product. An X-Y reaction device should be understood as meaning a device wherein X and Y combine to form a product and wherein the product does not necessarily then fragment.

The mass spectrometer may comprise means for causing and/or allowing ions to fragment by Post Source Decay ("PSD").

The mass spectrometer preferably further comprises an electrostatic energy analyser and/or a mass filter and/or an ion gate for selecting specific parent or precursor ions. The mass filter preferably comprises a magnetic sector mass filter, an RF quadrupole mass filter, a Wien filter or an orthogonal acceleration Time of Flight mass filter.

The mass spectrometer preferably further comprises a mass analyser. The mass analyser may be selected from the group consisting of: (i) a quadrupole mass analyser; (ii) a 2D or linear quadrupole mass analyser; (iii) a Paul or 3D quadrupole mass analyser; (iv) a Penning trap mass analyser; (v) an ion trap mass analyser; (vi) a magnetic sector mass analyser; (vii) Ion Cyclotron Resonance ("ICR") mass analyser; (viii) a Fourier Transform Ion Cyclotron Resonance ("FTICR") mass analyser; (ix) an electrostatic or orbitrap mass analyser; (x) a Fourier Transform electrostatic or orbitrap mass analyser; (xi) a Fourier Transform mass analyser; (xii) a Time of Flight mass analyser; (xiii) an axial acceleration Time of Flight mass analyser; (xiv) an orthogonal acceleration Time of Flight mass analyser; and (xv) a mass microscope stigmatic imaging Time of Flight mass analyser.

If the mass analyser comprises a mass microscope stigmatic imaging system then the fluence or irradiance of the laser spot is preferably constant or has a substantially flat topped profile.

According to another aspect of the present invention there is provided a method of controlling the spot size of a laser beam which is targeted onto a target region, sample surface or target plate arranged within an ion source or an ion imaging device of a mass spectrometer, the method comprising:
using one or more zoom lenses to control the size of a laser beam which is targeted onto a target region, sample surface or target plate arranged within an ion source or ion imaging device of a mass spectrometer.

According to another aspect of the present invention there is provided a method of controlling the size of a laser beam which is targeted onto a target region, sample surface or target plate arranged within an ion source or ion imaging device of a mass spectrometer, the method comprising:

splitting one or more lasers beam into a first laser beam and a second laser beam; and
overlapping the first and the second laser beams.

According to another aspect of the present invention there is provided a method of controlling the size of a laser beam as claimed in claim 33.

According to another aspect of the present invention there is provided a method of mass spectrometry comprising a method as discussed above.

According to the preferred embodiment an improved MALDI optical system and an improved method of focusing light in a MALDI ion source is provided.

The preferred embodiment preferably enables the laser spot diameter to be controlled whilst also ensuring that the laser fluence remains substantially uniform throughout or across the diameter of the spot. This is preferably achieved by utilising a variable magnification zoom lens or beam expander which preferably does not change the image position of the spot as the magnification is changed.

The preferred embodiment preferably enables a continuously variable spot size ranging from approximately 1 $\mu$m or the diffraction limit up to several hundred microns to be provided.

According to an embodiment the imaging device may be fitted to a conventional mass spectrometer comprising a MALDI ion source and a Time of Flight mass analyser. This enables the mass spectrometer to function both as an ion imaging mass spectrometer with high spatial resolution and also as a conventional mass spectrometer comprising MALDI ion source coupled to a Time of Flight mass analyser.

Various embodiments of the invention will now be described, by way of example only, and with reference to the accompanying drawings in which:

Fig. 1 shows a zoom lens for controlling the spot size of a laser beam in a MALDI ion source or ion imaging device according to a preferred embodiment of the present invention;
Fig. 2 shows an alternative embodiment of the present invention wherein a beam splitter is used to split a laser beam into two beams which are then partially overlapped or recombined; and
Fig. 3 shows a further embodiment of the present invention wherein a programmable mirror array or a digital micro-mirror array is used to focus a laser beam onto a target region or sample surface.

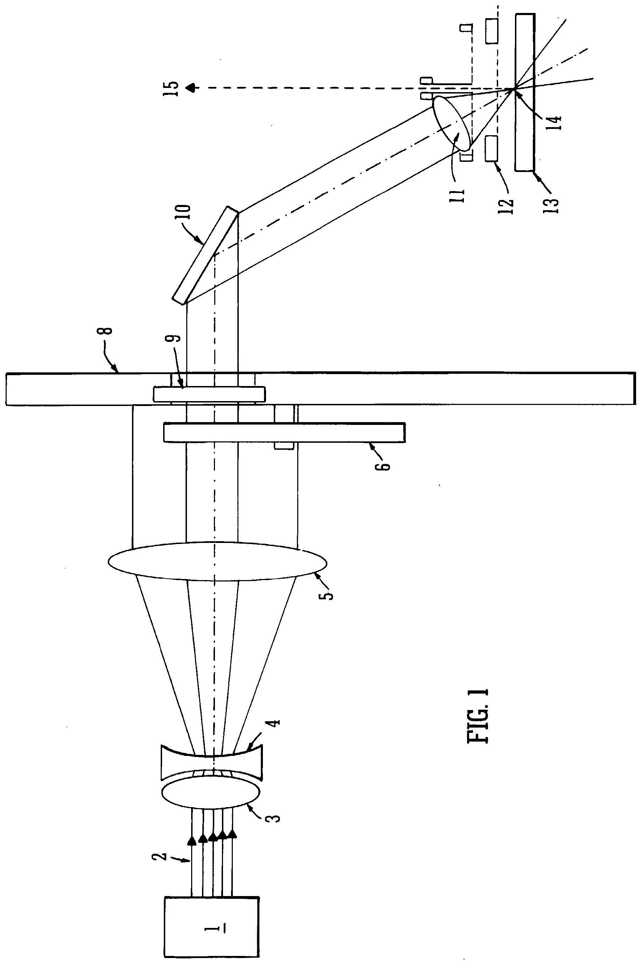

An imaging device for an ion source or ion imaging device according to a preferred embodiment of the present invention will now be described with reference to Fig. 1. The imaging device comprises a laser 1 for delivering a source or beam of light 2. The laser may be connected or coupled to an optical fibre which is arranged to output a beam of light 2.

The imaging device comprises a zoom lens 3,4,5 which is provided downstream of the laser 1. The zoom lens preferably comprises three separate lenses 3,4,5. One, two or all three of the lenses 3,4,5 are preferably mounted on a motorised translation stage. The axial positions of one, two or all three of the individual lenses 3,4,5 may preferably be altered or varied by means of motorised actuators. According to the preferred embodiment the axial position of one or more of the lenses 3,4,5 can be varied or altered which enables the laser beam to be expanded or contracted thereby decreasing or increasing the beam divergence .

According to the preferred embodiment the zoom lens 3,4,5 preferably expands the laser beam. A portion of the expanded laser beam is then preferably passed through an attenuator 6 which is arranged to adjust the intensity of the laser beam. The laser beam is then preferably arranged to pass through a vacuum window 9 into the housing of a vacuum chamber. The vacuum chamber window 9 is preferably mounted in a wall 8 of the vacuum chamber.

A mirror 10 is preferably arranged within the vacuum chamber and preferably directs or reflects the laser beam onto a final focusing lens 11. The final focusing lens 11 preferably has a relatively short focal length e.g. 15 mm. The final focusing lens 11 may according to an embodiment have a diameter of 12 mm. The final focusing lens 11 may preferably comprise either an achromat doublet or an aspheric lens. The final focusing lens 11 is preferably arranged to focus the laser beam down to a spot on or at a target region, sample surface or target plate 13. The intense pulsed laser beam which preferably impinges upon the target region, sample surface or target plate 13 preferably causes ions to be produced at the focal point 14 of the laser beam.

An ion source extraction lens 12 or other ion-optical device is preferably arranged in relatively close proximity to the target region, sample surface or target plate 13 and preferably assists in directing, attracting, accelerating or extracts ions which have been generated or produced at the target region, sample surface or target plate 13 away into the main housing of a mass spectrometer (not shown) which is preferably arranged downstream of the target region, sample surface or target plate 13.

The mass spectrometer preferably comprises a Time of Flight mass analyser (not shown) and may comprise a Collision Induced Dissociation collision or fragmentation cell (not shown).

The preferred method of controlling the spot size of the laser beam which is targeted onto the target region, sample surface or target plate 14 will now be discussed in more detail.

An approximation of the spot size D of the laser beam on the target region, sample surface or target plate 14 can be calculated from the following equation:

$$ D = \sqrt{(f.\theta)^2 + \left[\frac{0.067.f}{(f/Dl)^3}\right]^2 + [2.44\lambda.(f/Dl)]^2} $$

(1)

wherein a beam divergence or spot size term $(f.\theta)$, a spherical aberration term $(0.067.f/(f/Dl)^3)$ and a fundamental diffraction limited spot size term $(2.44. \lambda\text{-}f/Dl)$ are assumed to be independent and are added in quadrature and wherein $\theta$ is the known divergence of the laser beam, f is focal length of the final focusing lens 11, $\lambda$ is the wavelength of the laser beam and Dl is the diameter of the laser beam at the final focusing lens 11.

It is to be noted that the diffraction limited spot size term is relatively small for Gaussian laser beams. The spherical aberration term may be effectively eliminated using well designed aspheric lenses or achromat pairs. Accordingly, the dominant term in the above equation is the beam divergence or spot size term. Therefore, in order to generate a small spot size, the focal length f of the final focusing lens 11 should preferably be made as short as possible and the beam divergence $\theta$ should preferably be made as low as possible.

According to the preferred embodiment the spot size is preferably controlled or varied by changing the beam divergence $\theta$ of the laser beam. This is preferably accomplished by expanding or contracting the laser beam using the zoom lens assembly 3,4,5. If the laser beam is expanded then the beam divergence is reduced proportionally and hence the corresponding beam divergence or spot size term $(f.\theta)$ reduces .

According to the preferred embodiment the laser beam is preferably focused at the target region, sample surface or target plate 13 since a focused spot is preferably significantly more homogenous than an unfocused spot.

According to the preferred embodiment as the magnification of the zoom lens 3,4,5 is preferably varied the appropriate lenses within the zoom lens assembly 3,4,5 are preferably moved axially in a predefined function. This preferably ensures that the laser spot remains in focus at the target region, sample surface or target plate 13. For accuracy and convenience, the positional actuation of the lens elements 3,4,5 may be motorised and may be remotely controlled by, for example, a computer or other controller.

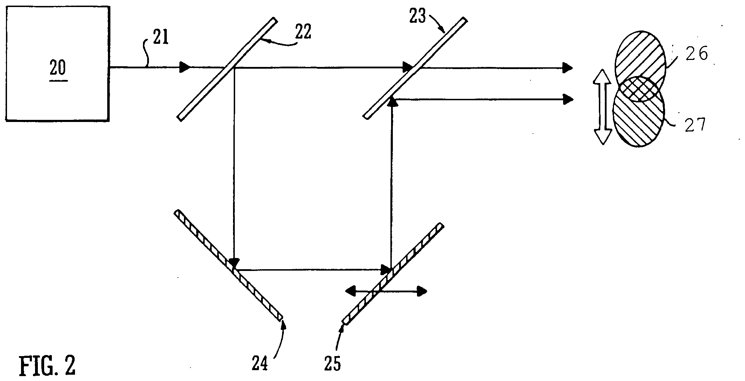

An alternative embodiment of the present invention will now be illustrated with reference to Fig. 2. According to this alternative embodiment the laser spot diameter or size is preferably controlled by overlapping two circular spots 26,27 which each preferably have a substantially flat top fluence profile. According to this embodiment a laser 20 is provided which preferably provides or generates a laser beam 21 which preferably has a substantially flat top fluence profile. The laser beam 21 passes through a beam splitter 22 which splits the beam into two paths or two separate beams.

One portion of the laser beam preferably passes or continues onto a beam combiner 23 whilst the other portion of the laser beam preferably passes to a first mirror 24. The laser beam which passed to the first mirror 24 is preferably-deflected or reflected by the first mirror 24 is then preferably deflected or reflected by a second mirror 25. The beam then preferably passes or continues onto the beam combiner 23. The two beams which arrive at or impinge upon the beam combiner 23 are arranged such that they then at least partially overlap or recombine.

The overlap region is the region of greatest intensity and preferably forms the ionisation spot on the target region, sample surface or target plate of the ion source or ion imaging device. The degree of overlap or recombination of the two laser beams may preferably be adjusted by moving either the first mirror 24 and/or the second mirror 25.

According to this alternative embodiment the diffraction limit discussed above in relation to the embodiment described and discussed with regard to Fig. 1 does not apply. It is therefore possible to provide laser beams having small spot sizes even when using laser radiation which may have a relatively long wavelength such as IR radiation.

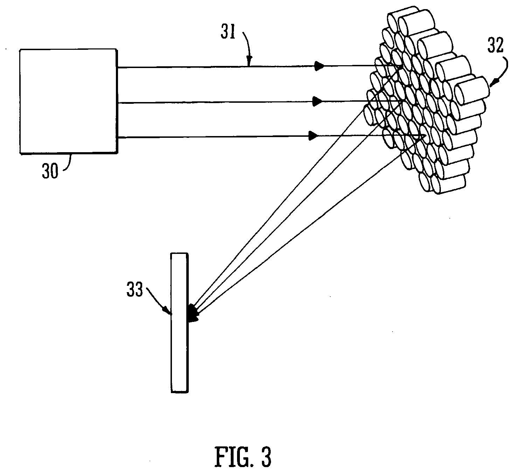

A further embodiment of the present invention will now be described with reference to Fig. 3. Fig. 3 shows an embodiment comprising a laser source 30 and a programmable mirror array (PMA) or a digital micro-mirror array 32 arranged downstream of the laser source 30.

A laser beam 31 is emitted from the laser source 30 and is arranged to impinge upon the programmable mirror array or the digital micro-mirror array 32. The programmable mirror array or the digital micro-mirror array 32 is preferably automatically controlled.

The programmable mirror array or the digital micro-mirror array 32 comprises a plurality of individual mirrors, reflective elements or pixels. Each individual mirror, reflective element or pixel may preferably be controlled by a computer or other means. The individual mirrors, reflective elements or pixels are arranged and configured in a mode of operation so as to direct and focus laser light onto the target region, sample surface or target plate 33 of an ion source or ion imaging device.

The focal point, beam angle and shape or profile of the laser spot may be controlled by the programmable mirror array or the digital micro-mirror array 32. The laser spot fluence or homogeneity is preferably maintained as the spot diameter is preferably varied.

Although the present invention has been described with reference to preferred embodiments, it will be understood by those skilled in the art that various changes in form and detail may be made without departing from the scope of the invention as defined by the accompanying claims.

**Claims**

1. A mass spectrometer comprising:

   a laser (1);
   an ion source or imaging device having a target region, sample surface or target plate (13) arranged therein; and apparatus for controlling the spot size of a laser beam (2)which is targeted, in use, onto said target region, sample surface or target plate (13), **characterised in that** said apparatus comprises one or more zoom lenses.

2. A mass spectrometer as claimed in claim 1, wherein said one or more zoom lenses (3, 4, 5) comprises a first lens (3) and means arranged and adapted to alter or vary the axial position of said first lens (3).

3. A mass spectrometer as claimed in claim 2, wherein said one or more zoom lenses (3, 4, 5) comprises a second lens (4) and means arranged and adapted to alter or vary the axial position of said second lens (4).

4. A mass spectrometer as claimed in claim 3, wherein said one or more zoom lenses (3, 4, 5) comprises a third lens (5) and means arranged and adapted to alter or vary the axial position of said third lens (5).

5. A mass spectrometer as claimed in any preceding claim, wherein said one or more zoom lenses (3, 4, 5) are arranged to expand and/or contract a laser beam (2).

6. A mass spectrometer as claimed in any preceding claim, wherein said one or more zoom lenses (3, 4, 5) are arranged to increase and/or decrease the beam divergence of a laser beam (2) .

7. A mass spectrometer as claimed in any preceding claim, wherein said one or more zoom lenses (3, 4, 5) comprise a variable magnification zoom lens or beam expander.

8. A mass spectrometer as claimed in claim 7, wherein the image position of a laser spot remains substantially invariant as the magnification is altered or changed.

9. A mass spectrometer comprising:

   a laser (20);
   an ion source or imaging device having a target region, sample surface or target plate arranged therein; and apparatus for controlling the spot size of a laser beam (21) which is targeted, in use, onto said target region, sample surface or target plate, **characterised in that** said apparatus comprises:

   at least one beam splitter (22) for splitting one or more laser beams (21) into a first laser beam and a second laser beam; and
   overlap means for at least partially or wholly overlapping said first and said second laser beams.

10. A mass spectrometer as claimed in claim 9, wherein said first laser beam and/or said second laser beam have a substantially constant, uniform or homogeneous fluence or irradiance profile.

**11.** A mass spectrometer as claimed in claim 9 or 10, wherein said overlap means comprises at least one beam combiner (23) arranged to at least partially or wholly overlap said first laser beam and said second laser beam.

**12.** A mass spectrometer as claimed in claim 9, 10 or 11, further comprising means arranged and adapted to vary the degree of overlap of said first and second beams.

**13.** A mass spectrometer as claimed in claim 12, wherein said means arranged and adapted to vary the degree of overlap or recombination comprises one or more mirrors (24, 25) which are arranged to be translated or moved.

**14.** A mass spectrometer as claimed in claim 12 or 13, wherein the image position of a laser spot remains substantially invariant as the degree of overlap is altered or changed.

**15.** A mass spectrometer comprising:

a laser (30);
an ion source or imaging device having a target region, sample surface or target plate (33) arranged therein; and apparatus for controlling the spot size of a laser beam which is targeted, in use, onto said target region, sample surface or target plate (33), said apparatus comprising:

a programmable mirror array or a digital micro-mirror array (32) comprising a plurality of individually controllable pixel or mirror elements; **characterised by** means arranged and adapted to control said pixel or mirror elements in order to focus laser light onto said target region, sample surface or target plate (33).

**16.** A mass spectrometer as claimed in claim 15, wherein the image position of a laser spot remains substantially invariant as said programmable mirror array or digital micro-mirror array (32) is altered or changed.

**17.** A mass spectrometer as claimed in any preceding claim, wherein the diameter or size of said laser beam (2; 21; 31) is continuously variable.

**18.** A mass spectrometer as claimed in any preceding claim, wherein said laser beam (2; 21; 31) which impinges, in use, upon said target region, sample surface or target plate (13; 33) has a laser fluence or homogeneity which varies by $\leq 5\%$, $\leq 10\%$, $\leq 15\%$, $\leq 20\%$, $\leq 25\%$, $\leq 30\%$, $\leq 35\%$, $\leq 40\%$, $\leq 45\%$, $\leq 50\%$, $\leq 55\%$, $\leq 60\%$, $\leq 65\%$, $\leq 70\%$, $\leq 75\%$, $\leq 80\%$, $\leq 85\%$, $\leq 90\%$, $\leq 95\%$ or $\leq 100\%$ across at least 5%, 10%, 15%, 20%, 25%, 30%, 35%, 40%, 45%, 50%, 55%, 60%, 65%, 70%, 75%, 80%, 85%, 90%, 95% or 100% of the diameter, size or width of said laser beam (2; 21; 31).

**19.** A mass spectrometer as claimed in any preceding claim, wherein said one or more lasers (2; 21; 31) comprises a pulsed laser.

**20.** A mass spectrometer as claimed in any of claims 1-18, wherein said one or more lasers comprises a continuous laser.

**21.** A mass spectrometer as claimed in any preceding claim, further comprising an attenuator (6) for adjusting or reducing the intensity of a laser beam (2; 21; 31).

**22.** A mass spectrometer as claimed in any preceding claim, further comprising a vacuum chamber and wherein said target region, sample surface or target plate (13; 33) is located within said vacuum chamber.

**23.** A mass spectrometer as claimed in claim 22, wherein said vacuum chamber comprises a window (9) through which a laser beam (2; 21; 31) is transmitted in use.

**24.** A mass spectrometer as claimed in any preceding claim, further comprising one or more mirrors (10) for directing a laser beam (2; 21; 31) onto said target region, sample surface or target plate (13; 33).

**25.** A mass spectrometer as claimed in any preceding claim, further comprising a focusing lens (11) for focusing a laser beam (2; 21; 31) onto said target region, sample surface or target plate (13; 33).

**26.** A mass spectrometer as claimed in claim 25, wherein said focusing lens (11) has a focal length selected from the group consisting of: (i) < 5 mm; (ii) 5-10 mm; (iii) 10-15 mm; (iv) 15-20 mm; (v) 20-25 mm; (vi) 25-30 mm; (vii) 30-35 mm; (viii) 35-40 mm; (ix) 40-45 mm; (x) 45-50 mm; and (xi) > 50 mm.

27. A mass spectrometer as claimed in any preceding claim, further comprising an extraction lens (12) or ion-optical arrangement arranged downstream of said target region, sample surface or target plate (13; 33), said extraction lens (12) or ion-optical arrangement being arranged to accelerate, attract or extract ions away from said target region, sample surface or target plate (13;33).

28. A mass spectrometer as claimed in any preceding claim, wherein said ion source comprises a Laser Desorption Ionisation ("LDI") ion source.

29. A mass spectrometer as claimed in any preceding claim, further comprising an electrostatic energy analyser and/or a mass filter and/or an ion gate for selecting specific parent or precursor ions.

30. A mass spectrometer as claimed in any preceding claim, further comprising a mass analyser.

31. A method of controlling the spot size of a laser beam (2) which is targeted onto a target region, sample surface or target plate (13) arranged within an ion source or an ion imaging device of a mass spectrometer, **characterised in that** said method comprises:

using one or more zoom lenses (3, 4, 5) to control the spot size of a laser beam (2) which is targeted onto a target region, sample surface or target plate (13) arranged within an ion source or ion imaging device of a mass spectrometer.

32. A method of controlling the spot size of a laser beam (21) which is targeted onto a target region, sample surface or target plate arranged within an ion source or ion imaging device of a mass spectrometer, **characterised in that** said method comprises:

splitting one or more laser beams (21) into a first laser beam and a second laser beam; and
overlapping said first and said second laser beams.

33. A method of controlling the spot size of a laser beam (31) which is targeted onto a target region, sample surface or target plate (33) arranged within an ion source or ion imaging device of a mass spectrometer, said method comprising:

using a programmable mirror array or a digital micro-mirror array (32) comprising a plurality of individually controllable pixel or mirror elements to control the size of a laser beam (31) which is targeted onto a target region, sample surface or target plate (33) arranged within an ion source or ion imaging device of a mass spectrometer, **characterised in that**:

the programmable mirror array or the digital micro-mirror array (32) focuses the laser beam (31) onto the target region, sample surface or target plate (33).

34. A method of mass spectrometry comprising a method as claimed in claim 31, 32, or 33.

**Patentansprüche**

1. Massenspektrometer, umfassend:

einen Laser (1);
eine Ionenquelle oder Abbildungsvorrichtung mit einer darin angeordneten Zielregion, Probenoberfläche oder Zielplatte (13); und
Vorrichtung zum Steuern der Spotgröße eines Laserstrahls (2), der im Betrieb auf die Zielregion, Probenoberfläche oder Zielplatte (13) gerichtet ist, **dadurch gekennzeichnet, dass** die Vorrichtung eine oder mehrere Zoom-Linsen umfasst.

2. Massenspektrometer nach Anspruch 1, wobei die eine oder die mehreren Zoom-Linsen (3, 4, 5) eine erste Linse (3) und Mittel umfassen, die angeordnet und angepasst sind, um die axiale Position der ersten Linse (3) zu verändern oder zu variieren.

3. Massenspektrometer nach Anspruch 2, wobei die eine oder die mehreren Zoom-Linsen (3, 4, 5) eine zweite Linse (4) und Mittel umfassen, die angeordnet und angepasst sind, um die axiale Position der zweiten Linse (4) zu verändern oder zu variieren.

4.  Massenspektrometer nach Anspruch 3, wobei die eine oder die mehreren Zoom-Linsen (3, 4, 5) eine dritte Linse (5) und Mittel umfassen, die angeordnet und angepasst sind, um die axiale Position der dritten Linse (5) zu verändern oder zu variieren.

5.  Massenspektrometer nach einem der vorstehenden Ansprüche, wobei die eine oder die mehreren Zoom-Linsen (3, 4, 5) angeordnet sind, um einen Laserstrahl (2) aufzuweiten und/oder zu kontrahieren.

6.  Massenspektrometer nach einem der vorstehenden Ansprüche, wobei die eine oder die mehreren Zoom-Linsen (3, 4, 5) angeordnet sind, um die Strahldivergenz eines Laserstrahls (2) zu erhöhen und/oder zu verringern.

7.  Massenspektrometer nach einem der vorstehenden Ansprüche, wobei die eine oder die mehreren Zoom-Linsen (3, 4, 5) eine Zoom-Linse oder einen Strahlaufweiter mit variabler Vergrößerung umfassen.

8.  Massenspektrometer nach Anspruch 7, wobei die Bildposition eines Laserspots im Wesentlichen unveränderlich bleibt, auch wenn die Vergrößerung verändert oder modifiziert wird.

9.  Massenspektrometer, umfassend:

    einen Laser (20);
    eine Ionenquelle oder Abbildungsvorrichtung mit einer darin angeordneten Zielregion, Probenoberfläche oder Zielplatte; und
    Vorrichtung zum Steuern der Spotgröße eines Laserstrahls (21), der im Betrieb auf die Zielregion, Probenoberfläche oder Zielplatte gerichtet ist, **dadurch gekennzeichnet, dass** die Vorrichtung umfasst:

    mindestens einen Strahlteiler (22) zur Aufteilung eines oder mehrerer Laserstrahlen (21) in einen ersten Laserstrahl und einen zweiten Laserstrahl; und
    Überlappungsmittel zum zumindest teilweisen oder vollständigen Überlappen des ersten und des zweiten Laserstrahls.

10. Massenspektrometer nach Anspruch 9, wobei der erste Laserstrahl und/oder der zweite Laserstrahl ein im Wesentlichen konstantes, gleichmäßiges oder homogenes Fluenz- oder Bestrahlungsprofil aufweisen.

11. Massenspektrometer nach Anspruch 9 oder 10, wobei die Überlappungsmittel mindestens einen Strahlkombinierer (23) umfasst, der so angeordnet ist, dass er den ersten Laserstrahl und den zweiten Laserstrahl zumindest teilweise oder vollständig überlappt.

12. Massenspektrometer nach Anspruch 9, 10 oder 11, weiter umfassend Mittel, die so angeordnet und angepasst sind, dass sie den Grad der Überlappung des ersten und des zweiten Strahls variieren.

13. Massenspektrometer nach Anspruch 12, wobei die Mittel, die angeordnet und angepasst sind, um den Grad der Überlappung oder Rekombination zu variieren, einen oder mehrere Spiegel (24, 25) umfassen, die angeordnet sind, um verschoben oder versetzt zu werden.

14. Massenspektrometer nach Anspruch 12 oder 13, wobei die Bildposition eines Laserspots im Wesentlichen unveränderlich bleibt, auch wenn der Grad der Überlappung verändert oder modifiziert wird.

15. Massenspektrometer, umfassend:

    einen Laser (30);
    eine Ionenquelle oder Abbildungsvorrichtung mit einer darin angeordneten Zielregion, Probenoberfläche oder Zielplatte (33); und
    Vorrichtung zum Steuern der Spotgröße eines Laserstrahls, der im Betrieb auf die Zielregion, Probenoberfläche oder Zielplatte (33) gerichtet ist, wobei die Vorrichtung umfasst:

    eine programmierbare Spiegelanordnung oder eine digitale Mikrospiegelanordnung (32), die eine Vielzahl von einzeln steuerbaren Pixel- oder Spiegelelementen umfasst; **gekennzeichnet durch** Mittel, die angeordnet und angepasst sind, um die Pixel- oder Spiegelelemente zu steuern, um Laserlicht auf die Zielregion, Probenoberfläche oder Zielplatte (33) zu fokussieren.

16. Massenspektrometer nach Anspruch 15, wobei die Bildposition eines Laserspots im Wesentlichen unveränderlich bleibt, auch wenn die programmierbare Spiegelanordnung oder die digitale Mikrospiegelanordnung (32) verändert oder modifiziert wird.

17. Massenspektrometer nach einem der vorstehenden Ansprüche, wobei der Durchmesser oder die Größe des Laserstrahls (2; 21; 31) kontinuierlich veränderbar ist.

18. Massenspektrometer nach einem der vorstehenden Ansprüche, wobei der Laserstrahl (2; 21; 31), der im Betrieb auf die Zielregion, Probenoberfläche oder Zielplatte (13; 33) trifft, eine Laserfluenz oder Homogenität aufweist, die um $\leq 5\%$, $\leq 10\%$, $\leq 15\%$, $\leq 20\%$, $\leq 25\%$, $\leq 30\%$, $\leq 35\%$, $\leq 40\%$, $\leq 45\%$, $\leq 50\%$, $\leq 55\%$, $\leq 60\%$, $\leq 65\%$, $\leq 70\%$, $\leq 75\%$, $\leq 80\%$, $\leq 85\%$, $\leq 90\%$, $\leq 95\%$ oder $\leq 100\%$ über mindestens 5 %, 10 %, 15 %, 20 %, 25 %, 30 %, 35 %, 40 %, 45 %, 50 %, 55 %, 60 %, 65 %, 70 %, 75 %, 80 %, 85 %, 90 %, 95 % oder 100 % des Durchmessers, der Größe oder der Breite des Laserstrahls (2; 21; 31) variiert.

19. Massenspektrometer nach einem der vorstehenden Ansprüche, wobei der eine oder die mehreren Laser (2; 21; 31) einen gepulsten Laser umfassen.

20. Massenspektrometer nach einem der Ansprüche 1-18, wobei der eine oder die mehreren Laser einen Dauerstrichlaser umfassen.

21. Massenspektrometer nach einem der vorstehenden Ansprüche, weiter umfassend einen Dämpfungsregler (6) zum Einstellen oder Reduzieren der Intensität eines Laserstrahls (2; 21; 31).

22. Massenspektrometer nach einem der vorstehenden Ansprüche, weiter umfassend eine Vakuumkammer, und wobei die Zielregion, Probenoberfläche oder Zielplatte (13; 33) innerhalb der Vakuumkammer angeordnet ist.

23. Massenspektrometer nach Anspruch 22, wobei die Vakuumkammer ein Fenster (9) umfasst, durch das im Betrieb ein Laserstrahl (2; 21; 31) übertragen wird.

24. Massenspektrometer nach einem der vorstehenden Ansprüche, weiter umfassend einen oder mehrere Spiegel (10) zum Richten eines Laserstrahls (2; 21; 31) auf die Zielregion, Probenoberfläche oder Zielplatte (13; 33).

25. Massenspektrometer nach einem der vorstehenden Ansprüche, weiter umfassend eine Fokussierlinse (11) zum Fokussieren eines Laserstrahls (2; 21; 31) auf die Zielregion, Probenoberfläche oder Zielplatte (13; 33).

26. Massenspektrometer nach Anspruch 25, wobei die Fokussierlinse (11) eine Fokuslänge aufweist, ausgewählt aus der Gruppe bestehend aus: (i) < 5 mm; (ii) 5-10 mm; (iii) 10-15 mm; (iv) 15-20 mm; (v) 20-25 mm; (vi) 25-30 mm; (vii) 30-35 mm; (viii) 35-40 mm; (ix) 40-45 mm; (x) 45-50 mm; und (xi) > 50 mm.

27. Massenspektrometer nach einem der vorstehenden Ansprüche, weiter umfassend eine Extraktionslinse (12) oder ionenoptische Anordnung, die stromabwärts von der Zielregion, Probenoberfläche oder Zielplatte (13; 33) angeordnet ist, wobei die Extraktionslinse (12) oder ionenoptische Anordnung so angeordnet ist, dass sie Ionen von der Zielregion, Probenoberfläche oder Zielplatte (13; 33) weg beschleunigt, anzieht oder extrahiert.

28. Massenspektrometer nach einem der vorstehenden Ansprüche, wobei die Ionenquelle eine Laser-Desorptions-/Ionisations-("LDI") Ionenquelle umfasst.

29. Massenspektrometer nach einem der vorstehenden Ansprüche, weiter umfassend einen elektrostatischen Energieanalysator und/oder einen Massenfilter und/oder ein Ionengatter zur Auswahl spezifischer Eltern- oder Vorläuferionen.

30. Massenspektrometer nach einem der vorstehenden Ansprüche, weiter umfassend einen Massenanalysator.

31. Verfahren zum Steuern der Spotgröße eines Laserstrahls (2), der auf eine Zielregion, Probenoberfläche oder Zielplatte (13) gerichtet ist, die innerhalb einer Ionenquelle oder einer Ionenabbildungsvorrichtung eines Massenspektrometers angeordnet ist, **dadurch gekennzeichnet, dass** das Verfahren umfasst:

Verwendung einer oder mehrerer Zoom-Linsen (3, 4, 5) zur Steuerung der Spotgröße eines Laserstrahls (2), der auf eine Zielregion, Probenoberfläche oder Zielplatte (13) gerichtet ist, die innerhalb einer Ionenquelle oder Ionenabbildungsvorrichtung eines Massenspektrometers angeordnet ist.

**32.** Verfahren zum Steuern der Spotgröße eines Laserstrahls (21), der auf eine Zielregion, Probenoberfläche oder Zielplatte gerichtet ist, die innerhalb einer Ionenquelle oder einer Ionenabbildungsvorrichtung eines Massenspektrometers angeordnet ist, **dadurch gekennzeichnet, dass** das Verfahren umfasst:

Aufteilung eines oder mehrerer Laserstrahlen (21) in einen ersten Laserstrahl und einen zweiten Laserstrahl; und Überlappen des ersten und des zweiten Laserstrahls.

**33.** Verfahren zum Steuern der Spotgröße eines Laserstrahls (31), der auf eine Zielregion, Probenoberfläche oder Zielplatte (33) gerichtet ist, die innerhalb einer Ionenquelle oder einer Ionenabbildungsvorrichtung eines Massenspektrometers angeordnet ist, **dadurch gekennzeichnet, dass** das Verfahren umfasst:

Verwendung einer programmierbaren Spiegelanordnung oder einer digitalen Mikrospiegelanordnung (32) umfassend eine Vielzahl von einzeln steuerbaren Pixel- oder Spiegelelemente zur Steuerung der Größe eines Laserstrahls (31), der auf eine Zielregion, Probenoberfläche oder Zielplatte (33) gerichtet ist, die innerhalb einer Ionenquelle oder einer Ionenabbildungsvorrichtung eines Massenspektrometers angeordnet ist, **dadurch gekennzeichnet, dass**:

die programmierbare Spiegelanordnung oder die digitale Mikrospiegelanordnung (32) den Laserstrahl (31) auf die Zielregion, Probenoberfläche oder Zielplatte (33) fokussiert.

**34.** Verfahren zur Massenspektrometrie, umfassend ein Verfahren nach Anspruch 31, 32 oder 33.

**Revendications**

**1.** Spectromètre de masse comprenant :

un laser (1) ;
une source d'ions ou un dispositif d'imagerie ayant une région cible, une surface d'échantillon ou une plaque cible (13) agencée à l'intérieur ; et
un appareil pour réguler la taille de point d'un faisceau laser (2) qui est ciblé, en cours d'utilisation, sur ladite région cible, surface d'échantillon ou plaque cible (13), **caractérisé en ce que** ledit appareil comprend un ou plusieurs objectifs zoom.

**2.** Spectromètre de masse selon la revendication 1, dans lequel lesdits un ou plusieurs objectifs zoom (3, 4, 5) comprennent un premier objectif (3) et un moyen agencé et adapté pour modifier ou faire varier la position axiale dudit premier objectif (3).

**3.** Spectromètre de masse selon la revendication 2, dans lequel lesdits un ou plusieurs objectifs zoom (3, 4, 5) comprennent un deuxième objectif (4) et un moyen agencé et adapté pour modifier ou faire varier la position axiale dudit deuxième objectif (4).

**4.** Spectromètre de masse selon la revendication 3, dans lequel lesdits un ou plusieurs objectifs zoom (3, 4, 5) comprennent un troisième objectif (5) et un moyen agencé et adapté pour modifier ou faire varier la position axiale dudit troisième objectif (5).

**5.** Spectromètre de masse selon l'une quelconque des revendications précédentes, dans lequel lesdits un ou plusieurs objectifs zoom (3, 4, 5) sont agencés pour élargir et/ou contracter un faisceau laser (2).

**6.** Spectromètre de masse selon l'une quelconque des revendications précédentes, dans lequel lesdits un ou plusieurs objectifs zoom (3, 4, 5) sont agencés pour augmenter et/ou diminuer la divergence de faisceau d'un faisceau laser (2).

7. Spectromètre de masse selon l'une quelconque des revendications précédentes, dans lequel lesdits un ou plusieurs objectifs zoom (3, 4, 5) comprennent un objectif zoom à grossissement variable ou un élargisseur de faisceau.

8. Spectromètre de masse selon la revendication 7, dans lequel la position d'image d'un point laser reste sensiblement invariante lorsque le grossissement est modifié ou changé.

9. Spectromètre de masse comprenant :

un laser (20) ;
une source d'ions ou un dispositif d'imagerie ayant une région cible, une surface d'échantillon ou une plaque cible agencée à l'intérieur ; et
un appareil pour réguler la taille de point d'un faisceau laser (21) qui est ciblé, en cours d'utilisation, sur ladite région cible, surface d'échantillon ou plaque cible, **caractérisé en ce que** ledit appareil comprend :

au moins un diviseur de faisceau (22) pour diviser un ou plusieurs faisceaux laser (21) en un premier faisceau laser et un second faisceau laser ; et
un moyen de chevauchement pour mettre en chevauchement au moins partiellement ou totalement ledit premier et ledit second faisceaux laser.

10. Spectromètre de masse selon la revendication 9, dans lequel ledit premier faisceau laser et/ou ledit second faisceau laser ont un profil de fluence ou d'irradiance sensiblement constant, uniforme ou homogène.

11. Spectromètre de masse selon la revendication 9 ou 10, dans lequel ledit moyen de chevauchement comprend au moins un mélangeur de faisceaux (23) agencé pour mettre en chevauchement au moins partiellement ou totalement ledit premier faisceau laser et ledit second faisceau laser.

12. Spectromètre de masse selon la revendication 9, 10 ou 11, comprenant en outre un moyen agencé et adapté pour faire varier le degré de chevauchement desdits premier et second faisceaux.

13. Spectromètre de masse selon la revendication 12, dans lequel ledit moyen agencé et adapté pour faire varier le degré de chevauchement ou de recombinaison comprend un ou plusieurs miroirs (24, 25) qui sont agencés pour être translatés ou déplacés.

14. Spectromètre de masse selon la revendication 12 ou 13, dans lequel la position d'image d'un point laser reste sensiblement invariante lorsque le degré de chevauchement est modifié ou changé.

15. Spectromètre de masse comprenant :

un laser (30) ;
une source d'ions ou un dispositif d'imagerie ayant une région cible, une surface d'échantillon ou une plaque cible (33) agencée à l'intérieur ; et
un appareil pour réguler la taille de point d'un faisceau laser qui est ciblé, en cours d'utilisation, sur ladite région cible, surface d'échantillon ou plaque cible (33), ledit appareil comprenant :

un réseau de miroirs programmables ou un réseau de micro-miroirs numériques (32) comprenant une pluralité d'éléments de pixel ou de miroir réglables individuellement; **caractérisé par** un moyen agencé et adapté pour réguler lesdits éléments de pixel ou de miroir afin de focaliser la lumière laser sur ladite région cible, surface d'échantillon ou plaque cible (33).

16. Spectromètre de masse selon la revendication 15, dans lequel la position d'image d'un point laser reste sensiblement invariante lorsque ledit réseau de miroirs programmables ou réseau de micro-miroirs numériques (32) est modifié ou changé.

17. Spectromètre de masse selon l'une quelconque des revendications précédentes, dans lequel le diamètre ou la taille dudit faisceau laser (2 ; 21 ; 31) est continuellement variable.

18. Spectromètre de masse selon l'une quelconque des revendications précédentes, dans lequel ledit faisceau laser (2 ; 21; 31) qui atteint, en cours d'utilisation, ladite région cible, surface d'échantillon ou plaque cible (13; 33) a une fluence ou une homogénéité de laser qui varie de $\leq$ 5 %, $\leq$ 10 %, $\leq$ 15 %, $\leq$ 20 %, $\leq$ 25 %, $\leq$ 30 %, $\leq$ 35 %, $\leq$40%, $\leq$45%, $\leq$50%, $\leq$55%, $\leq$60%, $\leq$65%, $\leq$70%, $\leq$75%, $\leq$80%, $\leq$85%, $\leq$90%, $\leq$ 95 % ou $\leq$ 100 % sur au moins 5 %, 10 %, 15 %, 20 %, 25 %, 30 %, 35 %, 40 %, 45 %, 50 %, 55 %, 60 %, 65 %, 70 %, 75 %, 80 %, 85 %, 90 %, 95 % ou 100 % du diamètre, de la taille ou de la largeur dudit faisceau laser (2 ; 21 ; 31).

19. Spectromètre de masse selon l'une quelconque des revendications précédentes, dans lequel lesdits un ou plusieurs lasers (2 ; 21 ; 31) comprennent un laser pulsé.

20. Spectromètre de masse selon l'une quelconque des revendications 1 à 18, dans lequel lesdits un ou plusieurs lasers comprennent un laser continu.

21. Spectromètre de masse selon l'une quelconque des revendications précédentes, comprenant en outre un atténuateur (6) pour ajuster ou réduire l'intensité d'un faisceau laser (2; 21 ; 31).

22. Spectromètre de masse selon l'une quelconque des revendications précédentes, comprenant en outre une chambre à vide et dans lequel ladite région cible, surface d'échantillon ou plaque cible (13 ; 33) est située à l'intérieur de ladite chambre à vide.

23. Spectromètre de masse selon la revendication 22, dans lequel ladite chambre à vide comprend une fenêtre (9) à travers laquelle un faisceau laser (2 ; 21; 31) est transmis en cours d'utilisation.

24. Spectromètre de masse selon l'une quelconque des revendications précédentes, comprenant en outre un ou plusieurs miroirs (10) pour diriger un faisceau laser (2 ; 21 ; 31) sur ladite région cible, surface d'échantillon ou plaque cible (13 ; 33).

25. Spectromètre de masse selon l'une quelconque des revendications précédentes, comprenant en outre un objectif de focalisation (11) pour focaliser un faisceau laser (2 ; 21 ; 31) sur ladite région cible, surface d'échantillon ou plaque cible (13 ; 33).

26. Spectromètre de masse selon la revendication 25, dans lequel ledit objectif de focalisation (11) a une longueur focale sélectionnée dans le groupe constitué de : (i) < 5 mm ; (ii) 5-10 mm ; (iii) 10-15 mm ; (iv) 15-20 mm ; (v) 20-25 mm ; (vi) 25-30 mm ; (vii) 30-35 mm ; (viii) 35-40 mm ; (ix) 40-45 mm ; (x) 45-50 mm ; et (xi) > 50 mm.

27. Spectromètre de masse selon l'une quelconque des revendications précédentes, comprenant en outre un objectif d'extraction (12) ou un agencement optique ionique agencé en aval de ladite région cible, surface d'échantillon ou plaque cible (13 ; 33), ledit objectif d'extraction (12) ou agencement optique ionique étant agencé pour accélérer, attirer ou extraire des ions de ladite région cible, surface d'échantillon ou plaque cible (13; 33).

28. Spectromètre de masse selon l'une quelconque des revendications précédentes, dans lequel ladite source d'ions comprend une source d'ions de désorption-ionisation laser (« LDI »).

29. Spectromètre de masse selon l'une quelconque des revendications précédentes, comprenant en outre un analyseur d'énergie électrostatique et/ou un filtre de masse et/ou une grille ionique pour sélectionner des ions parents ou précurseurs spécifiques.

30. Spectromètre de masse selon l'une quelconque des revendications précédentes, comprenant en outre un analyseur de masse.

31. Procédé de régulation de la taille de point d'un faisceau laser (2) qui est ciblé sur une région cible, une surface d'échantillon ou une plaque cible (13) agencée à l'intérieur d'une source d'ions ou d'un dispositif d'imagerie ionique d'un spectromètre de masse, **caractérisé en ce que** ledit procédé comprend :

l'utilisation d'un ou plusieurs objectifs zoom (3, 4, 5) pour réguler la taille de point d'un faisceau laser (2) qui est ciblé sur une région cible, une surface d'échantillon ou une plaque cible (13) agencée à l'intérieur d'une source d'ions ou d'un dispositif d'imagerie ionique d'un spectromètre de masse.

32. Procédé de régulation de la taille de point d'un faisceau laser (21) qui est ciblé sur une région cible, une surface d'échantillon ou une plaque cible agencée à l'intérieur d'une source d'ions ou d'un dispositif d'imagerie ionique d'un spectromètre de masse, **caractérisé en ce que** ledit procédé comprend :

la division d'un ou plusieurs faisceaux laser (21) en un premier faisceau laser et un second faisceau laser ; et la mise en chevauchement dudit premier et dudit second faisceaux laser.

33. Procédé de régulation de la taille de point d'un faisceau laser (31) qui est ciblé sur une région cible, une surface d'échantillon ou une plaque cible (33) agencée à l'intérieur d'une source d'ions ou d'un dispositif d'imagerie ionique d'un spectromètre de masse, ledit procédé comprenant :

l'utilisation d'un réseau de miroirs programmables ou d'un réseau de micro-miroirs numériques (32) comprenant une pluralité d'éléments de pixel ou de miroir réglables individuellement pour réguler la taille d'un faisceau laser (31) qui est ciblé sur une région cible, une surface d'échantillon ou une plaque cible (33) agencée à l'intérieur d'une source d'ions ou d'un dispositif d'imagerie ionique d'un spectromètre de masse, **caractérisé en ce que** :

le réseau de miroirs programmables ou le réseau de micro-miroirs numériques (32) focalise le faisceau laser (31) sur la région cible, surface d'échantillon ou plaque cible (33).

34. Procédé de spectrométrie de masse comprenant un procédé selon la revendication 31, 32, ou 33.

FIG. 1

EP 1 829 081 B1

20

21

22

23

26

27

24

25

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6762405 B
- WO 2005079360 A
- EP 1150156 A
- JP H10258383 B

**Non-patent literature cited in the description**

- **SPENGLER, J.** *Am. Soc. Mass Spectrom,* 2002, vol. 13, 735-748
- **HEEREN.** *Anal. Chem.,* 2004, vol. 76, 5339-5344